# FASCICULE DE BREVET EUROPEEN

(11) **EP 3 261 204 B1**
(45) Date de publication et mention de la délivrance du brevet: **06.01.2021**
(21) Numéro de dépôt: 17166695.1
(22) Date de dépôt: 14.04.2017
(51) Int. Cl.: H02G 3/00

(54) **BRAS DE CONSOLE APTE À RÉSISTER À DE FORTES CONTRAINTES**
KONSOLENARM, DER IN DER LAGE IST, STARKEN BELASTUNGEN STANDZUHALTEN
CANTILEVER ARM CAPABLE OF WITHSTANDING HIGH STRESS

(30) Priorité: 23.06.2016 FR 1655883
(43) Date de publication de la demande: 27.12.2017
(73) Titulaire: Niedax France, 75015 Paris (FR)
(72) Inventeur: COLMONT, Gaetan, 62400 BETHUNE (FR)
(74) Mandataire: Demulsant, Xavier

(56) Documents cités:
- EP-A1- 0 813 280
- EP-A1- 1 542 329
- WO-A1-2008/111887
- FR-A1- 2 937 317
- US-A1- 2006 157 626

## Description

L'invention a trait au domaine des chemins de câbles, et plus particulièrement à une console pour le support de chemins de câbles, résistant à des contraintes sismiques.

Les chemins de câbles sont des structures permettant de supporter, aussi bien sur de grandes hauteurs (en orientation verticale) que de grandes longueurs (en orientation horizontale), notamment des câbles électriques, des câbles téléphoniques, des câbles de fibre optique, ou encore des câbles de réseau informatique.

Les chemins de câbles comprennent un fond et deux parois latérales faisant saillies de part et d'autre du fond et définissant, le plus souvent, une section transversale en U.

On distingue deux grandes familles de chemins de câbles : les chemins de câbles en tôle, obtenus par pliage d'une tôle perforée ou non, et les chemins de câbles en treillis de fils, obtenus par soudage de fils de chaîne (définissant une direction longitudinale du tronçon) sur des fils de trame pliés en U.

Les chemins de câbles se présentent conventionnellement sous la forme de tronçons, aboutés les uns aux autres à l'aide de moyens de couplage, indépendants ou intégrés aux tronçons. Ces moyens de couplage permettent, outre d'obtenir une bonne tenue mécanique de deux tronçons entre eux, de réaliser une continuité de support de câbles entre deux tronçons.

Depuis de nombreuses années, et sans qu'il n'existe de règles en la matière, la dimension longitudinale des tronçons de chemins de câbles est de trois mètres, en général.

Les chemins de câbles sont positionnés en hauteur sur des rails, des potences ou des consoles.

Les consoles comprennent un bras, solidaire d'un pendard, ou de toute autre structure de type colonne. Le bras peut être encastré, par exemple au moyen d'une soudure, dans une platine fixée au pendard. Afin d'alléger la structure et de limiter l'encombrement, les bras de console sont principalement fixés en porte-à-faux.

Les chemins de câbles sont alors fixés sur le bras des consoles. A cet effet, le bras est par exemple muni de perçages, dans lesquels sont insérés des moyens d'attache, maintenant le tronçon de chemin de câble contre le bras.

Les contraintes subies par les bras de console sont notamment dues à la charge statique qu'ils supportent, l'étude de la résistance à ce type de contraintes relevant de la conception des poutres.

Il est connu que, dans une configuration poutre encastrée, la quasi-totalité des contraintes est localisée au niveau de l'encastrement. C'est pourquoi, au lieu d'utiliser une poutre de section identique sur toute sa longueur, il est courant d'utiliser une poutre dont la section transversale s'évase d'une extrémité à une autre.

Par ailleurs, la section peut être ouverte, de sorte qu'elle forme un U, les faces latérales comportant des retours dirigés l'un vers l'autre.

Cependant, pour certains chemins de câbles, il peut être nécessaire de prendre en compte des charges supplémentaires dynamiques, par exemple afin de concevoir des bras de console résistants à des contraintes sismiques, ce qui se révèle une caractéristique critique dans des installations sensibles, telles que les centrales nucléaires.

Le document FR 2 937 317 décrit ainsi une console résistant à des contraintes sismiques, munie d'un bras encastré dans une platine. Le bras est soudé sur la platine transversale, permettant la fixation sur un pendard. La position à 90° du bras de console par rapport au pendard est assurée par le vissage de la platine sur le pendard. Le bras comprend une face support et deux faces latérales, s'étendant longitudinalement de part et d'autre de la face support, sensiblement à angle droit, de sorte qu'une section transversale du bras présente une forme en U. La face support et les faces latérales ont sensiblement une forme de trapèze. Chaque face latérale comprend un retour, muni d'un bord longitudinal, les retours s'étendant de façon coplanaire, sensiblement perpendiculairement aux faces latérales. Les bords longitudinaux s'étendent parallèlement, de sorte que les retours ont une forme générale triangulaire.

Un tel bras de console offre une bonne résistance à des charges dynamiques, créées par exemple lors d'un séisme. Cependant, le bras a, pour le support d'une charge plus importante comme par exemple de deux chemins de câbles, une résistance insuffisante au niveau de son encastrement et de son extrémité libre.

Une solution simple consistant à augmenter les dimensions d'un tel bras donnerait lieu à un bras lourd et nécessitant une grande quantité de matière pour sa fabrication.

Le document US 2006/01576026 décrit une console d'étagère pour des cabanes de jardin ou des entrepôts, pour le support de livres ou de pots de peinture, cette console étant adaptée à être fabriquée par pliage à l'aide d'outils manuels.

Un premier objectif est de proposer une console résistant à des contraintes dynamiques verticales et horizontales, telles que des contraintes engendrées lors de tremblements de terre.

Un deuxième objectif est de proposer une telle console, intégrant un minimum de matière.

Un troisième objectif est de proposer une telle console, dont le rapport de la masse par la résistance est faible par rapport aux consoles connues.

Un quatrième objectif est de proposer une telle console, simple de fabrication.

Un cinquième objectif est de proposer une telle console, sur laquelle peuvent être montés des chemins de câbles.

A cet effet, il est proposé, en premier lieu, une console pour le support de chemins de câbles résistant à des contraintes sismiques, la console comprenant une platine sur laquelle est solidarisé un bras comprenant une face support, une première face latérale et une deuxième face latérale, la première face latérale et la deuxième face latérale étant disposées symétriquement par rapport à un plan de symétrie, de sorte à former, avec la face support, une section transversale sensiblement en forme de U, la première face latérale comprenant, sur un premier bord longitudinal, un premier retour, dirigé vers le plan de symétrie, le premier retour comprenant, au niveau d'une grande extrémité du bras, une première oreille dirigée vers le plan de symétrie, et formant sur le premier retour un premier décrochement, disposé au niveau de la grande extrémité du bras, le premier retour comprenant en outre un premier côté principal, un premier côté secondaire, le premier côté principal et le premier côté secondaire étant parallèles au premier bord longitudinal, de sorte que le premier retour présente sensiblement une forme de L, ce premier retour augmente la résistance du bras à des contraintes exercées dans un plan défini par le premier retour.

Le bras peut ainsi résister à des contraintes dynamiques importantes, tout en restant de masse modérée.

Le bras est également simple de fabrication.

Diverses caractéristiques supplémentaires peuvent être prévues, seules ou en combinaison :
- la deuxième face latérale comprend, sur un deuxième bord longitudinal, un deuxième retour dirigé vers le plan de symétrie, le deuxième retour comprend, au niveau de la grande extrémité du bras, une deuxième oreille dirigée vers le plan de symétrie, et formant, sur le deuxième retour, un deuxième décrochement disposé au niveau de la grande extrémité du bras, de sorte que le deuxième retour présente sensiblement une forme de L ;
- le premier retour comprend, sur sa périphérie, un premier côté principal, un premier côté oblique et un premier côté secondaire, le premier côté oblique et le premier côté secondaire définissant la périphérie de la première oreille, le premier côté oblique reliant le premier côté principal et le premier côté secondaire ;
- le deuxième retour comprend, sur sa périphérie, un deuxième côté principal, un deuxième côté oblique et un deuxième côté secondaire, le deuxième côté oblique et le deuxième côté secondaire définissant la périphérie de la deuxième oreille, le deuxième côté oblique reliant le deuxième côté principal et le deuxième côté secondaire ;
- la largeur du premier retour au niveau du premier côté principal et du premier côté secondaire ainsi que la largeur du deuxième retour au niveau du deuxième côté principal et du deuxième côté secondaire sont constantes, de sorte que le premier retour et le deuxième retour présentent, respectivement au niveau du premier côté principal et du premier côté secondaire ainsi que au niveau du deuxième côté principal et du deuxième côté secondaire, une forme générale rectangulaire ;
- le premier retour et le deuxième retour sont coplanaires ;
- le premier retour et le deuxième retour sont symétriques par rapport au plan de symétrie ;
- la face support, la première face latérale et la deuxième face latérale présentent une forme générale sensiblement trapézoïdale et la face support comprend des trous oblongs.

la platine est apte à être fixée sur un pendard, le bras étant solidaire de la platine, au niveau de sa grande extrémité.

Dans une réalisation, le bras et la platine sont soudés l'un à l'autre.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique en perspective d'une console selon un premier mode de réalisation ;
- la figure 2 est une vue schématique de face de la console selon le premier mode de réalisation ;
- la figure 3 est une vue schématique en perspective d'un bras de la console selon le premier mode de réalisation ;
- la figure 4 est une vue schématique arrière du bras de la console selon le premier mode de réalisation ;
- la figure 5 est une vue schématique de dessus du bras de la console selon le premier mode de réalisation ;
- la figure 6 est une vue schématique de côté du bras de la console selon le premier mode de réalisation ;
- la figure 7 est une vue schématique de dessous du bras de la console selon le premier mode de réalisation ;
- la figure 8 est une vue schématique en perspective de la console selon un deuxième mode de réalisation ;
- la figure 9 est une vue schématique de face de la console selon le deuxième mode de réalisation.

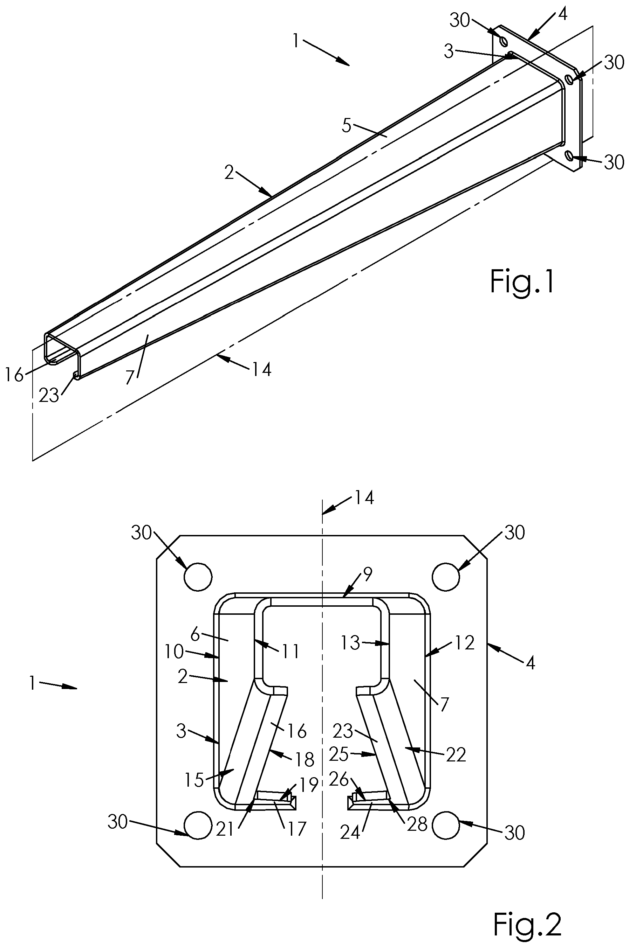

Sur la figure 1 est représentée une console **1,** selon un premier mode de réalisation, comprenant un bras **2,** apte à supporter un tronçon de chemin de câble (non représenté).

La console **1** est solidaire, au niveau d'une grande extrémité **3** du bras **2,** d'une platine **4** permettant la fixation de la console **1** à un pendard (non représenté), ou toute autre structure de type colonne.

Le bras **2** a une forme générale allongée, c'est-à-dire qu'une de ses dimensions est de loin supérieure aux deux autres.

Dans la suite de ce texte, on désigne par :
- longitudinal, la direction d'élancement du bras **2 ;**
- transversal, tout plan perpendiculaire à la direction d'élancement du bras **2.**

Dans ce qui suit, la largeur est définie comme étant une dimension mesurée sur une section transversale du bras **2.**

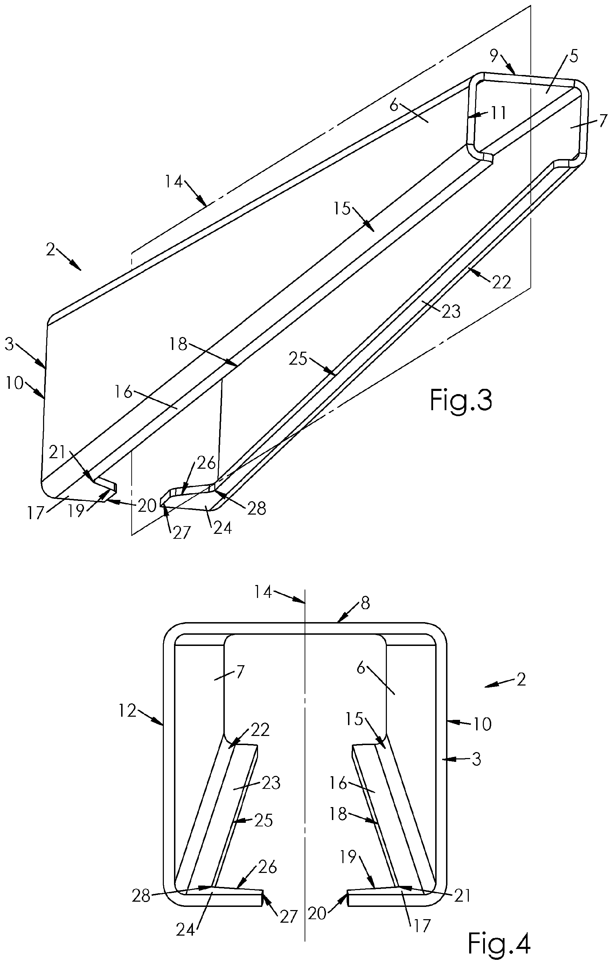

Le bras **2,** illustré sur les figures 3 à 7, comprend une face **5** support, une première face 6 latérale et une deuxième face **7** latérale.

La première face 6 latérale et la deuxième face **7** latérale sont disposées en saillie de la face **5** support. La première face **6** latérale et la deuxième face **7** latérale sont, de préférence, sensiblement perpendiculaires à la face **5** support.

Selon les modes de réalisations représentés, la face **5** support, la première face **6** latérale et la deuxième face **7** latérale forment une section transversale sensiblement en forme de U.

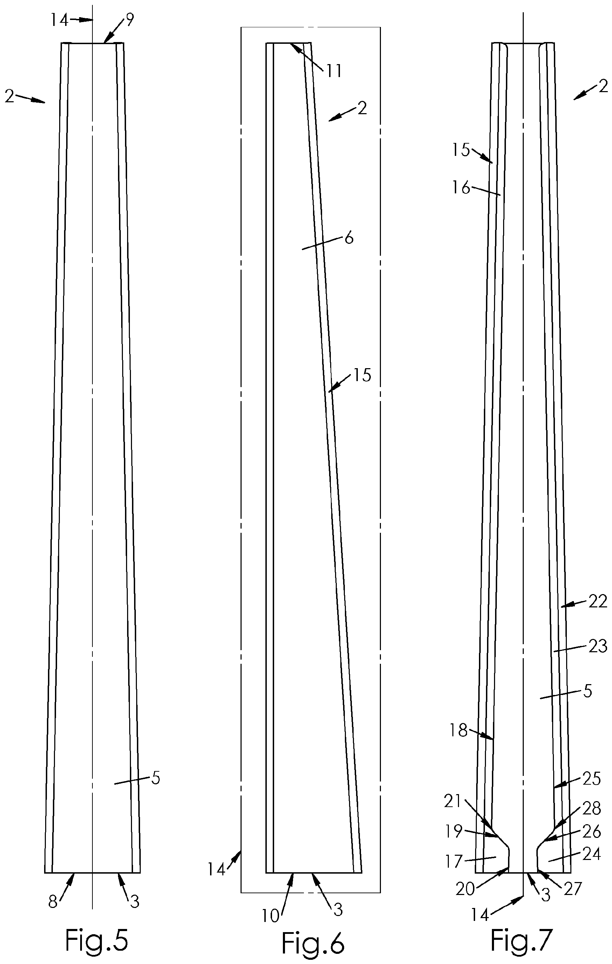

Comme représenté sur la figure 5, la face **5** support a une forme générale sensiblement trapézoïdale, munie d'un grand pan **8** support, disposé au niveau de la grande extrémité **3** du bras **2,** et d'un petit pan **9** support. Le grand pan **8** support et le petit pan **9** support sont sensiblement parallèles et disposés perpendiculairement à la direction d'élancement du bras **2.**

Comme représenté sur la figure 6, la première face **6** latérale a une forme générale sensiblement trapézoïdale, munie d'un premier grand pan **10,** disposé au niveau de la grande extrémité **3** du bras **2,** et d'un premier petit pan **11.** Le premier grand pan **10** et le premier petit pan **11** sont sensiblement parallèles et disposés perpendiculairement à la direction d'élancement du bras **2.**

La deuxième face **7** latérale a une forme générale sensiblement trapézoïdale, munie d'un deuxième grand pan **12,** disposé au niveau de la grande extrémité **3** du bras **2,** et d'un deuxième petit pan **13.** Le deuxième grand pan **12** et le deuxième petit pan **13** sont sensiblement parallèles et disposés perpendiculairement à la direction d'élancement du bras **2.**

Selon les modes de réalisation représentés, la première face **6** latérale et la deuxième face **7** latérale sont sensiblement symétriques par rapport à un plan **14** de symétrie.

La première face **6** latérale comprend, au niveau d'un premier bord **15** longitudinal de la première face **6** latérale, un premier retour **16,** en saillie de la première face **6** latérale et dirigé vers le plan **14** de symétrie. Le premier retour **16** comprend une première oreille **17,** disposée au niveau de la grande extrémité **3** du bras **2.**

Le premier retour **16** comprend, sur sa périphérie, un premier côté **18** principal, un premier côté **19** oblique et un premier côté **20** secondaire. Le premier côté **19** oblique relie le premier côté **18** principal et le premier côté **20** secondaire. Le premier côté **19** oblique et le premier côté **20** secondaire définissent la périphérie de la première oreille **17.**

La largeur du premier retour **16,** au niveau du premier côté **18** principal, est inférieure à la largeur du premier retour **16** au niveau du premier côté **20** secondaire, de sorte que la première oreille **17** forme un premier décrochement **21** sur le premier retour **16.** Le premier côté **19** oblique forme ainsi une cassure de pente par rapport au premier côté **18** principal et au premier côté **20** secondaire.

Avantageusement, la dimension suivant la direction longitudinale du premier côté **18** principal est supérieure à la dimension suivant la direction longitudinale du premier côté **20** secondaire.

Selon les modes de réalisation représentés, le premier côté **18** principal et le premier côté **20** secondaire sont sensiblement parallèles au premier bord **15** longitudinal de la première face 6 latérale définissant, pour le premier retour **16** une forme sensiblement en L.

Le premier côté **19** oblique forme avec le premier côté **18** principal et le premier côté **20** secondaire des angles de sensiblement quarante-cinq degrés.

Avantageusement, le premier côté **19** oblique est relié au premier côté **18** principal et au premier côté **20** secondaire par des congés.

La deuxième face **7** latérale comprend, au niveau d'un deuxième bord **22** longitudinal de la deuxième face **7** latérale, un deuxième retour **23,** en saillie de la deuxième face **7** latérale et dirigé vers le plan **14** de symétrie. Le deuxième retour **23** comprend une deuxième oreille **24,** disposée au niveau de la grande extrémité **3** du bras **2.**

Le deuxième retour **23** comprend, sur sa périphérie, un deuxième côté **25** principal, un deuxième côté **26** oblique et un deuxième côté **27** secondaire. Le deuxième côté **26** oblique relie le deuxième côté **25** principal et le deuxième côté **27** secondaire. Le deuxième côté **26** oblique et le deuxième côté **27** secondaire définissent la périphérie de la deuxième oreille **24.**

La largeur du deuxième retour **23** au niveau du deuxième côté **25** principal est inférieure à la largeur du deuxième retour **23** au niveau du deuxième côté **27** secondaire, de sorte que la deuxième oreille **24** forme un deuxième décrochement **28** sur le deuxième retour **23.** Le deuxième côté **26** oblique forme ainsi une cassure de pente, par rapport au deuxième côté **25** principal et au deuxième côté **27** secondaire.

Avantageusement, la dimension suivant la direction longitudinale du deuxième côté **25** principal est supérieure à la dimension suivant la direction longitudinale du deuxième côté **27** secondaire.

Selon les modes de réalisation représentés, le deuxième côté **25** principal et le deuxième côté **27** secondaire sont sensiblement parallèles au deuxième bord **22** longitudinal de la deuxième face **7** latérale et définissent, pour le deuxième retour **23** une forme sensiblement en L.

Le deuxième côté **26** oblique forme avec le deuxième côté **25** principal et le deuxième côté **27** secondaire des angles de sensiblement quarante-cinq degrés.

Avantageusement, le deuxième côté **26** oblique est relié au deuxième côté **25** principal et au deuxième côté **27** secondaire par des congés.

Selon les modes de réalisation représentés, le premier retour **16** et le deuxième retour **23** sont sensiblement symétriques par rapport au plan **14** de symétrie.

Selon un mode de réalisation, le premier retour **16** et le deuxième retour **23** s'étendent dans un plan conférant au bras **2** une forte résistance à des charges appliquées dans ce plan et sensiblement perpendiculairement à la direction d'élancement du bras **2.**

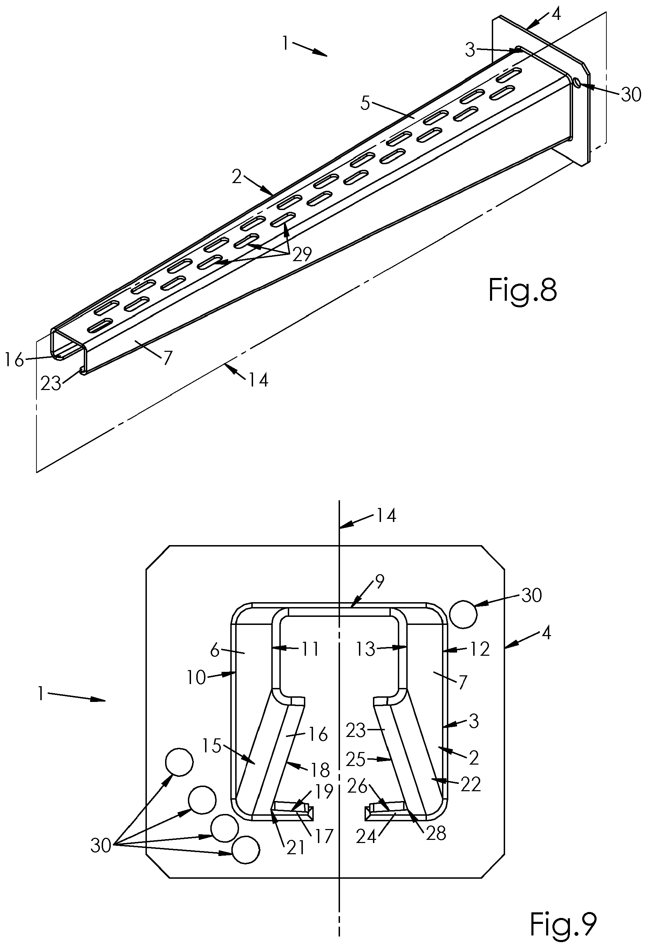

Selon un mode de réalisation, représenté sur les figures 8 et 9, la face **5** support comprend des trous **29** oblongs, répartis longitudinalement, permettant la fixation du tronçon de chemin de câble au bras **2** de la console **1.**

Avantageusement, le bras **2** est monobloc et fabriqué à partir d'une plaque, de préférence en acier, découpée et pliée.

Selon le premier mode de réalisation, illustré sur les figures 1 et 2, et un deuxième mode de réalisation, illustré sur les figures 8 et 9, le bras **2** est soudé sensiblement au centre de la platine **4,** de sorte que le bras **2** se trouve encastré au niveau de sa grande extrémité **3.**

La platine **4** a par exemple une forme générale rectangulaire. Dans certaines mises en œuvre, la platine 4 est munie de perçages 30 aptes à permettre la fixation de la console **1** au pendard.

Selon un mode de réalisation, les perçages **30** sont présents au nombre de quatre. Les perçages **30** sont disposés aux quatre coins de la platine **4.**

Selon d'autres modes de réalisation, quatre perçages **30** sont disposés en arc de cercle, dont le centre est confondu avec celui d'un perçage **30** disposé dans le coin de la platine **4.** Une telle disposition des perçages **30** permet de solidariser la console **1** au pendard, par le biais d'une bride à deux branches (non représentée), fixée au pendard, dont une première branche est insérée dans le perçage **30** disposé dans le coin de la platine **4** et la deuxième branche est insérée dans l'un des quatre autres perçages **30.**

Le parallélisme du premier côté **18** principal du premier retour **16** avec le premier bord **15** longitudinal de la première face **6** latérale, le parallélisme du deuxième côté **25** principal du deuxième retour **23** avec le deuxième bord **22** longitudinal de la deuxième face **7** latérale ainsi que la première oreille **17** du premier retour **16** et la deuxième oreille **24** du deuxième retour **23** augmentent considérablement la résistance de la console **1** à des contraintes exercées dans le plan défini par le premier retour **16** et par le deuxième retour **23** et sensiblement perpendiculairement à la direction d'élancement du bras **2.**

La console **1** peut ainsi résister à des contraintes dynamiques importantes, tout en minimisant sa masse.

La console **1** est également simple de fabrication.

## Revendications

1. Console **(1)** pour le support de chemins de câbles résistant à des contraintes sismiques, la console **(1)** comportant une platine **(4)** sur laquelle est solidarisé un bras **(2)** comprenant une face **(5)** support, une première face **(6)** latérale et une deuxième face **(7)** latérale, la première face **(6)** latérale et la deuxième face **(7)** latérale étant disposées symétriquement par rapport à un plan **(14)** de symétrie de sorte à former, avec la face **(5)** support, une section transversale sensiblement en forme de U, la première face **(6)** latérale comprenant, sur un premier bord **(15)** longitudinal, un premier retour
**(16)** dirigé vers le plan **(14)** de symétrie, le premier retour (16) comprenant en outre un premier côté (18) principal, le bras **(2)** étant **caractérisée en ce que** le premier retour **(16)** comprend, au niveau d'une grande extrémité **(3)** du bras **(2),** une première oreille **(17)** dirigée vers le plan **(14)** de symétrie, et formant, sur le premier retour **(16),** un premier décrochement **(21)** disposé au niveau de la grande extrémité **(3)** du bras **(2),** le premier retour **(16)** comprenant un premier côté **(20)** secondaire, le premier côté **(18)** principal et le premier côté **(20)** secondaire étant parallèle au premier bord longitudinal **(15),** de sorte que le premier retour **(16)** présente sensiblement une forme de L, ce premier retour **(16)** augmente la résistance du bras **(2)** à des contraintes exercées dans un plan défini par le premier retour **(16).**

2. Console **(1)** selon la revendication précédente, **caractérisée en ce que** la deuxième face **(7)** latérale comprend, sur un deuxième bord **(22)** longitudinal, un deuxième retour **(23)** dirigé vers le plan **(14)** de symétrie, le deuxième retour **(23)** comprend, au niveau de la grande extrémité **(3)** du bras **(2),** une deuxième oreille **(24)** dirigée vers le plan **(14)** de symétrie, et formant, sur le deuxième retour **(23),** un deuxième décrochement **(28)** disposé au niveau de la grande extrémité **(3)** du bras **(2),** de sorte que le deuxième retour **(23)** présente sensiblement une forme de L.

3. Console **(1)** selon la revendication 2, **caractérisée en ce que** le premier retour **(16)** comprend, sur sa périphérie, le premier côté **(18)** principal, un premier côté **(19)** oblique et le premier côté **(20)** secondaire, le premier côté **(19)** oblique et le premier côté **(20)** secondaire définissent la périphérie de la première oreille **(17),** le premier côté **(19)** oblique reliant le premier côté **(18)** principal et le premier côté **(20)** secondaire.

4. Console **(1)** selon l'une quelconque des revendications 2 et 3, **caractérisée en ce que** le deuxième retour **(23)** comprend, sur sa périphérie, un deuxième côté **(25)** principal, un deuxième côté **(26)** oblique et un deuxième côté **(27)** secondaire, le deuxième côté **(26)** oblique et le deuxième côté **(27)** secondaire définissent la périphérie de la deuxième oreille **(24),** le deuxième côté .**(26)** oblique reliant le deuxième côté **(25)** principal et le deuxième côté **(27)** secondaire.

5. Console **(1)** selon la revendication 4 dépendant de la revendication 3, **caractérisée en ce que** la largeur du premier retour **(16)** au niveau du premier côté **(18)** principal et du premier côté **(20)** secondaire ainsi que la largeur du deuxième retour **(23)** au niveau du deuxième côté **(25)** principal et du deuxième côté **(27)** secondaire sont constantes de sorte que le premier retour **(16)** et le deuxième retour **(23)** présentent, respectivement au niveau du premier côté **(18)** principal et du premier côté **(20)** secondaire ainsi que au niveau du deuxième côté **(25)** principal et du deuxième côté **(27)** secondaire, une forme générale rectangulaire.

6. Console **(1)** selon l'une quelconque des revendications 2 à 5, **caractérisée en ce que** le premier retour **(16)** et le deuxième retour **(23)** sont coplanaires.

7. Console (1) selon l'une quelconque des revendications 2 à 6, **caractérisée en ce que** le premier retour **(16)** et le deuxième retour **(23)** sont symétriques par rapport au plan **(14)** de symétrie.

8. Console **(1)** selon l'une quelconque des revendications précédentes, **caractérisée en ce que** la face **(5)** support, la première face **(6)** latérale et la deuxième face **(7)** latérale présentent une forme générale sensiblement trapézoïdale et **en ce que** la face **(5)** support comprend des trous **(29)** oblongs.

9. Console **(1)** selon l'une quelconque des revendications précédentes, **caractérisée en ce que** la platine (4) est apte à être fixée sur un pendard, le bras **(2)** étant solidaire de la platine **(4),** au niveau de sa grande extrémité **(3).**

10. Console **(1)** selon la revendication précédente, **caractérisée en ce que** le bras **(2)** et la platine **(4)** sont soudés l'un à l'autre.

## Patentansprüche

1. Konsole (1) für den Träger von Kabelführungen, die seismischen Beanspruchungen widerstehen, wobei die Konsole (1) eine Platine (4) umfasst, auf der ein Arm (2) fest befestigt ist, der eine Trägerseite (5), eine erste seitliche Seite (6) und eine zweite seitliche Seite (7) umfasst, wobei die erste seitliche Seite (6) und die zweite seitliche Seite (7) in Bezug auf eine Symmetrieebene (14) derart symmetrisch angeordnet sind, dass sie mit der Trägerseite (5) einen deutlich U-förmigen Querschnitt bilden, wobei die erste seitliche Seite (6) auf einem ersten länglichen Rand (15) eine erste Rückführung (16) umfasst, die zur Symmetrieebene (14) gerichtet ist, wobei die erste Rückführung (16) darüber hinaus eine erste Hauptseite (18) umfasst, wobei der Arm **dadurch gekennzeichnet ist, dass** die erste Rückführung (16) an einem großen Ende (3) des Arms (2) einen ersten Ansatz (17) umfasst, der zur Symmetrieebene (14) gerichtet ist und auf der ersten Rückführung (16) einen ersten Absatz(21) bildet, der an dem großen Ende (3) des Arms (2) angeordnet ist, wobei die erste Rückführung (16) eine erste sekundäre Seite (20) umfasst, wobei die erste Hauptseite (18) und die erste sekundäre Seite (20) zum ersten länglichen Rand (15) derart parallel sind, dass die erste Rückführung (16) deutlich eine L-Form aufweist, die erste Rückführung (16) den Widerstand des Arms (2) gegenüber Beanspruchungen erhöht, die in einer von der ersten Rückführung (16) definierten Ebene ausgeübt sind.

2. Konsole (1) gemäß dem voranstehenden Anspruch, **dadurch gekennzeichnet, dass** die zweite seitliche Seite (7) auf einem zweiten länglichen Rand (22) eine zweite Rückführung (23) umfasst, die zur Symmetrieebene (14) gerichtet ist, die zweite Rückführung (23) an dem großen Ende (3) des Arms (2) einen zweiten Ansatz (24) umfasst, der zur Symmetrieebene (14) gerichtet ist und auf der zweiten Rückführung (23) einen zweiten Absatz (28) bildet, der an dem großen Ende (3) des Arms (2) derart angeordnet ist, dass die zweite Rückführung (23) deutlich eine L-Form aufweist.

3. Konsole (1) gemäß Anspruch 2, **dadurch gekennzeichnet, dass** die erste Rückführung (16) auf ihrem Umfang die erste Hauptseite (18), eine erste schräge Seite (19) und die erste sekundäre Seite (20) umfasst, die erste schräge Seite (19) und die erste sekundäre Seite definieren den Umfang des ersten Ansatzes (17), wobei die erste schräge Seite (19) die erste Hauptseite (18) und die erste sekundäre Seite (20) verbindet.

4. Konsole (1) gemäß irgendeinem der Ansprüche 2 und 3, **dadurch gekennzeichnet, dass** die zweite Rückführung (23) auf ihrem Umfang eine zweite Hauptseite (25), eine zweite schräge Seite und eine sekundäre zweite Seite (27) umfasst, die zweite schräge Seite (26) und die zweite sekundäre Seite (27) umfasst, die zweite schräge Seite (26) und die zweite sekundäre Seite (27) den Umfang des zweiten Ansatzes (24) definieren, wobei die zweite schräge Seite (26) die zweite Hauptseite (25) und die zweite sekundäre Seite (27( verbindet.

5. Konsole (1) gemäß Anspruch 4, der von Anspruch 5 abhängt, **dadurch gekennzeichnet, dass** die Breite der ersten Rückführung (16) an der ersten Hauptseite (18) und der ersten sekundären Seite (20) sowie der Breite der zweiten Rückführung (23) an der zweiten Hauptseite (25) und der zweiten sekundären Seite (27) derart konstant sind, dass die erste Rückführung (16) und die zweite Rückführung (23) jeweils an der ersten Hauptseite (18) und der ersten sekundären Seite (20) sowie an der zweiten Hauptseite (25) und der zweiten sekundären Seite (27) eine allgemein Rechteckform aufweisen.

6. Konsole (1) gemäß irgendeinem der Ansprüche 2 bis 5, **dadurch gekennzeichnet, dass** die erste Rückführung (16) und die zweite Rückführung (23) koplanar sind.

7. Konsole (1) gemäß irgendeinem der Ansprüche 2 bis 6, **dadurch gekennzeichnet, dass** die erste Rückführung (16) und die zweite Rückführung (23) in Bezug auf die Symmetrieebene (14) symmetrisch sind.

8. Konsole (1) gemäß irgendeinem der voranstehenden Ansprüche, **dadurch gekennzeichnet, dass** die Trägerseite (5), die erste seitliche Seite (6) und die zweite seitliche Seite (7) eine allgemeine, deutlich trapezartige Form aufweisen und dass die Trägerseite (5) längliche Löcher (29) aufweist.

9. Konsole (1) gemäß irgendeinem der voranstehenden Ansprüche, **dadurch gekennzeichnet, dass** die Platine (4) geeignet ist, auf einem Gegenstück befestigt zu sein, wobei der Arm (2) fest mit der Platine (4) an seinem großen Ende (3) befestigt ist.

10. Konsole (1) gemäß dem voranstehenden Anspruch, **dadurch gekennzeichnet, dass** der Arm (2) und die Platine (4) aneinander verschweißt sind.

## Claims

1. A bracket (1) for supporting raceways resistant to seismic stresses, the bracket (1) including a platen (4) to which is secured an arm (2) comprising a support face (5), a first side face (6) and a second side face (7), the first side face (6) and second side face (7) being symmetrically disposed relative to a plane (14) of symmetry so as to form, with the support face (5), a substantially U-shaped cross-section, the first side face (6) comprising, on a first longitudinal edge (15), a first return (16) directed to the plane (14) of symmetry, the first return (16) further comprising a first primary side (18), the arm (2) being **characterised in that** the first return (16) comprises, at a large end (3) of the arm (2), a first lug (17) directed to the plane (14) of symmetry, and forming, on the first return (16), a first step (21) disposed at the large end (3) of the arm (2), the first return (16) comprising a first secondary side (20), the first primary side (18) and first secondary side (20) being parallel to the first longitudinal edge (15), so that the first return (16) has a substantially L-shape, this first return (16) increases the resistance of the arm (2) to stresses exerted in a plane defined by the first return (16).

2. The bracket (1) according to the previous claim, **characterised in that** the second side face (7) comprises, on a second longitudinal edge (22), a second return (23) directed to the plane (14) of symmetry, the second return (23) comprises, at the large end (3) of the arm (2), a second lug (24) directed to the plane (14) of symmetry, and forming, on the second return (23), a second step (28) disposed at the large end (3) of the arm (2), so that the second return (23) has a substantially L-shape.

3. The bracket (1) according to claim 2, **characterised in that** the first return (16) comprises, on its periphery, the first primary side (18), a first slanting side (19) and the first secondary side (20), the first slanting side (19) and first secondary side (20) define the periphery of the first lug (17), the first slanting side (19) connecting the first primary side (18) and the first secondary side (20).

4. The bracket (1) according to any of claims 2 and 3, **characterised in that** the second return (23) comprises, on its periphery, a second primary side (25), a second slanting side (26) and a second secondary side (27), the second slanting side (26) and second secondary side (27) define the periphery of the second lug (24), the second slanting side (26) connecting the second primary side (25) and second secondary side (27).

5. The bracket (1) according to claim 4 depending on claim 3, **characterised in that** the width of the first return (16) at the first primary side (18) and first secondary side (20) as well as the width of the second return (23) at the second primary side (25) and second secondary side (27) are constant so that the first return (16) and second return (23) have, at the first primary side (18) and first secondary side (20) as well as at the second primary side (25) and second secondary side (27) respectively, a generally rectangular shape.

6. The bracket (1) according to any of claims 2 to 5, **characterised in that** the first return (16) and second return (23) are coplanar.

7. The bracket (1) according to any of claims 2 to 6, **characterised in that** the first return (16) and second return (23) are symmetrical relative to the plane (14) of symmetry.

8. The bracket (1) according to any of the previous claims, **characterised in that** the support face (5), first side face (6) and second side face (7) have generally a substantially trapezoid shape and **in that** the support face (5) comprises oblong holes (29).

9. The bracket (1) according to any of the previous claims, **characterised in that** the platen (4) is able to be fastened to a pipe hanger, the arm (2) being integral with the platen (4), at its large end (3).

10. The bracket (1) according to the previous claim, **characterised in that** the arm (2) and platen (4) are welded to each other.
